# EUROPÄISCHE PATENTSCHRIFT

(11) **EP 0 810 063 B1**
(45) Veröffentlichungstag und Bekanntmachung des Hinweises auf die Patenterteilung: **02.12.1998**
(21) Anmeldenummer: 97103684.3
(22) Anmeldetag: 06.03.1997
(51) Int. Cl.: B23Q 11/08

(54) **Abdeckanordnung für Führungsschienen von Maschinen**
Cover arrangement for guide bars of machines
Couverture pour des rails de guidage de machines

(43) Veröffentlichungstag der Anmeldung: 03.12.1997
(73) Patentinhaber: ERNST GROB AG, CH-8708 Männedorf (CH)
(72) Erfinder: Dériaz, Marc, 8706 Meilen (CH); Kapkin, Ekrem, 8640 Rapperswil (CH)
(74) Vertreter: Kemény AG Patentanwaltbüro

(56) Entgegenhaltungen:
- EP-A- 0 268 011
- CH-A- 515 835
- DE-A- 3 806 354
- DE-A- 3 817 773
- DE-A- 4 015 699
- FR-A- 2 374 761

## Beschreibung

Die vorliegende Erfindung betrifft eine Abdeckanordnung nach dem Oberbegriff von Anspruch 1.

Bei Werkstückbearbeitungsmaschinen, deren Arbeitsteil im Maschinenrahmen auf Führungsschienen verfahrbar ist, müssen die nicht vom Arbeitsteil abgedeckten oder benutzen Führungsschienenbereiche in der Regel abgedeckt werden, um diese vor dem Eindringen von Fremdkörpern oder vor schädlichen Einwirkungen herabfallender Komponenten zu schützen. Diese Einflüsse könnten nämlich ein Verfahren des Arbeitsteils verunmöglichen, was zu Unterbrüchen im Betrieb und Ausfall der Maschine führen könnte. Wenn der Arbeitsteil in Bewegung gesetzt wird, muss die Abdeckung aber auch den Führungsschienenbereich, welcher durch den Arbeitsteil befahren wird, einfach und rasch freigeben.

Herkömmlicherweise sind beispielsweise Abdeckungen bekannt, welche als Bänder auf einer Rolle in der Verlängerung der Führungsschienen am Maschinengehäuse angeordnet sind. Dabei wird das eine Ende der Abdeckbänder am Arbeitsteil angebracht, welches beim Verfahren jeweils einen Teil von der Rolle abspult, resp. diese wieder durch die Rolle aufwickeln lässt. Als nachteilig hat sich bei dieser Anordnung die Grösse der Rolle erwiesen, welche aus dem eigentlichen Gehäusebereich herausragt und den Platzbedarf für die Maschine beträchtlich erhöhen kann. Der erhöhte Platzbedarf führt zu grösseren Produktionskosten.

Weitere bekannte Ausführungsformen von solchen Abdeckanordnungen weisen beispielsweise Abdeckungen in Balgform auf. Dabei kann der Balg in einem gewissen Bereich in die Länge gezogen oder zusammengeschoben werden. Der Platzbedarf fällt im Gegensatz zur Lösung mit der Rolle kleiner aus, weist aber immer noch, insbesondere im Verhältnis zur Führungsschienenbreite, eine nicht unbeträchtliche zusätzliche Grösse auf.

Eine ähnliche Lösung sieht anstelle eines Balges einen Stapel mit übereinanderschiebbaren Abdeckungssegmenten vor. Hierbei wird wiederum das eine Ende des Stapels, d.h. das erste Segment, mit der Maschine verbunden und von dieser über die Führungsschienen gezogen resp. wieder zum Stapel zurückverschoben. Aber auch diese Lösung benötigt in der Höhe einen beträchtlichen Platzbedarf, insbesondere bei mittleren und grossen Führungsschienenlängen, wodurch der Arbeitsbereich der Maschine eingeschränkt wird.

Aus DE 3817773 ist eine Abdeckanordnung für Führungsschienen von Maschinen bekannt, deren flächige Abdeckungen im Querschnitt derart bemessen sind, dass damit die Schienenoberseite abdeckbar ist. Die miteinander verbundenen Abdeckungen sind dabei wenigstens an einem Ende mit dem Ende der Führungsschiene oder der Maschine in Schienenlängsrichtung unverschiebbar verbunden. Das Arbeitsteil der Maschine weist ferner Führungselemente auf, über welche jeweils die entsprechenden Abdeckungen geführt sind, um in diesem Bereich von der Führungsschiene abgehoben zu werden. Der Nachteil dieser Lösung liegt allerdings darin, dass die Flanken der Führungsschienen durch die Abdeckungen nicht geschützt resp. abgedeckt werden und daher nur ein beschränkter Schutz der Oberseite der Führungsschienen erzielt wird.

Aus FR 2374761 ist nun u.a. ebenfalls eine Abdeckung bekannt, bei welcher die Abdeckelemente aus Abdeckplatten für die Führungschienenoberfläche und auf beiden Seiten senkrecht davon abstehenden Kupplungsgliedern bestehen, welche auch die Seitenwände der Führungsschienen abdecken. Die einzelnen Abdeckelemente sind dabei untereinander gelenkig über die Kupplungsglieder verbunden. Derartige Abdeckelemente werden derart eingesetzt, dass sie einerseits fest mit dem Arbeitsteil der Maschine verbunden sind und andererseits mit dem Maschinenrahmen. Zwar wird durch diese Lösung eine gute Abdeckung der Führungsschiene erzielt, aber beim Verfahren des Arbeitsteiles in die Endpositionen auf den Führungsschienen wird ein nicht unbeträchtlicher Raumbedarf über das Maschinenende hinaus durch die feste Länge der verbundenen Abdeckelemente benötigt.

Die Aufgabe der vorliegenden Erfindung bestand nun darin, eine Abdeckanordnung der genannten Art zu finden, welche die oben erwähnten Nachteile hinsichtlich Platzbedarf und Arbeitsbereich der Maschine vermeidet, und dabei zuverlässig auch die Seitenbereiche der Führungsschienen schützt.

Diese Aufgabe wird erfindungsgemäss durch eine Anordnung mit den Merkmalen von Anspruch 1 gelöst. Bevorzugte Ausführungsformen der Erfindung ergeben sich aus den weiteren Ansprüchen 2 bis 7.

Die erfindungsgemässe Anordnung benötigt vorteilhafterweise kaum zusätzlichen Platzbedarf neben der eigentlichen Führungsschiene. In der Länge wird vorwiegend die Länge des ersten resp. letzen Abdeckelementes zusätzlich zur Länge der eigentlichen Führungsschiene benötigt. In der Breite und Höhe wird lediglich die Dicke der Abdeckung selbst benötigt, d.h. es wird praktisch kein zusätzlicher Raum für die Abdeckung benötigt. Weiter deckt die erfindungsgemässe Anordnung die Führungsschiene auch im Bereich des Arbeitsteils der Maschine zuverlässig und vollständig ab.

Vorteilhafterweise ist diese Abdeckanordnung auch für unterschiedliche Führungsschienenbreiten einsetzbar, durch den erfindungsgemässen Aufbau aus Kettensegmenten. Damit lassen sich aus wenigen Grundelementen für beliebig ausgestaltete Führungsschienen auf einfache und rationelle Weise Abdeckanordnungen herstellen.

Eine beispielhafte Ausführungsform der Erfindung wird nachstehend anhand von Zeichnungen noch näher erläutert. Es zeigen :
Fig. 1 die Seitenansicht eines auf Führungsschienen verfahrbaren Arbeitsteiles einer Werkzeugmaschine;
Fig. 2 die Seitenansicht von Abdeckelementen einer erfindungsgemässen Abdeckanordnung;
Fig. 3 die Aufsicht von Figur 2;
Fig. 4 der Längsschnitt durch eine erfindungsgemässe Abdeckanordnung im Bereich des Arbeitsteiles der Maschine; und
Fig. 5 den Querschnitt durch die erfindungsgemässe Abdeckanordnung im Bereich der Führungsschiene.

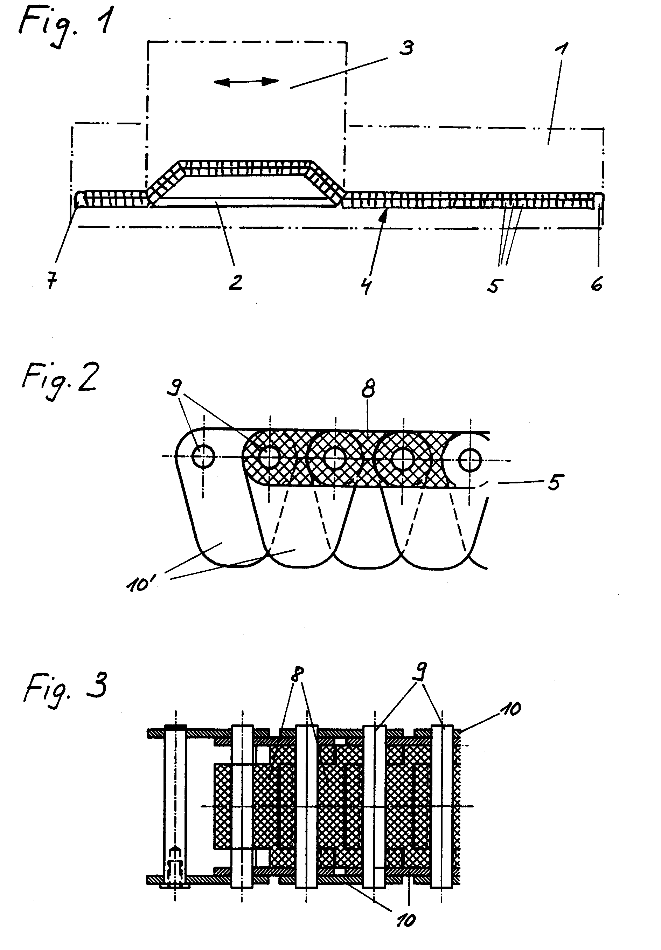

Figur 1 zeigt schematisch die Seitenansicht einer Maschine 1 mit einem auf Führungsschienen 2 verfahrbaren Arbeitsteil 3. Der Uebersichtlichkeit halber sind die Maschine 1 und der Arbeitsteil 3 in der Figur lediglich gestrichelt dargestellt. Die Führungsschiene 2 ist hier durch eine erfindungsgemässe Abdeckanordnung geschützt. Von dieser Abdeckanordnung sind hier die zu einem flexiblen Abdeckprofil 4 verbundenen Abdeckprofilelemente 5 dargestellt.

Das Abdeckprofil 4 ist hier an beiden Enden 6,7 der Führungsschiene mit dieser resp. mit der Maschine 1 verbunden. Die Länge des Abdeckprofils 4 ist derart bemessen, dass das Abdeckprofii 4 im Bereich des Arbeitsteiles 3 von der Führungsschiene 2 abgehoben ist. Damit kann in diesem Bereich das Arbeitsteil 3 in resp. auf die Führungsschiene 2 an- resp. eingreifen. In der Regel ist das Gehäuse des Arbeitsteiles 3 in diesem Bereich derart ausgestaltet, dass damit eine Abdeckung realisiert wird.

Beim Verfahren des Arbeitsteiles 3 ist nun durch die erfindungsgemässe Abdeckanordnung vorteilhafterweise eine ständige, zuverlässige Abdeckung der Führungsschiene 2 realisiert, ohne dass ein zusätzlicher Raum in resp. um die Maschine 1 benötigt wird. Die Ausdehnung der erfindungsgemässen Abdeckanordnung entspricht etwa dem Raumbedarf der Führungsschienen ohne Abdeckung.

In Figur 2 ist eine detaillierte Seitenansicht von mehreren miteinander verbundenen Profilelementen 5 dargestellt. Die einzelnen Profilelemente 5 sind dabei aus Kettengliedern 8, welche mittels Bolzen 9 gelenkig miteinander verbunden sind, aufgebaut. Die jeweils zwei äussersten Kettenglieder 10 sind dabei als senkrecht zu den Bolzenachsen nach unten herausragende Platten ausgeführt. Diese Platten 10' von jeweils benachbarten Kettengliedern 10 überlappen sich dabei teilweise, wie aus der Figur 2 hervorgeht. Weiter ist in Figur 2 gestrichelt die Führungsschiene 2 dargestellt, um die Abdeckung zu veranschaulichen.

In Figur 3 ist noch die Aufsicht auf die Anordnung nach Figur 2 dargestellt, woraus die Kettengliederanordnung noch besser ersichtlich ist.

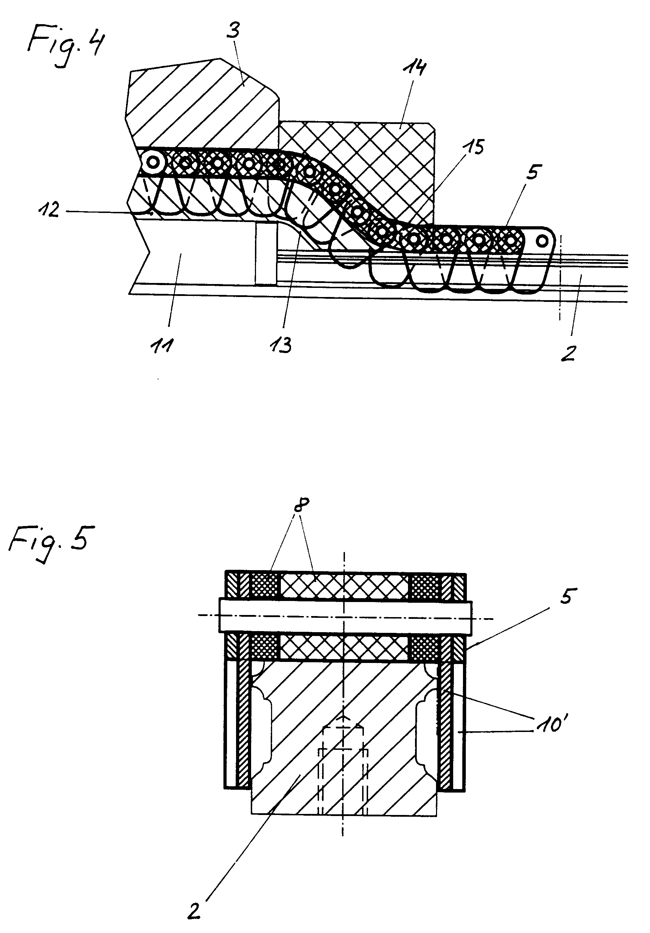

In Figur 4 ist ein Ausschnitt eines Endbereiches des Arbeitsteiles 3 schematisch im Längsschnitt dargestellt. Das Arbeitsteil 3 liegt über Laufelemente 11 auf der Führungsschiene 2 auf. Ausserhalb des Arbeitsteiles 3 liegen die Abdeckprofilelemente 5 auf der Führungsschiene 2 auf und decken diese ab. Vor dem Laufelement 11 werden die Abdeckprofilelemente 5 durch ein unteres Führungselement 12 von der Führungsschiene 2 abgehoben und über das Laufelement 5 geführt. Das Führungselement 12 weist eine keilförmig ausgebildetes Ende 13 auf. Beim Verfahren des Arbeitsteiles 3 wird dieses Ende 13 unter die Kettenglieder der Abdeckprofilelemente 5 geschoben, worauf diese von der Führungsschiene 2 abgehoben werden. Zur besseren Uebersicht sind bei den Abdeckprofilelementen in diesem Bereich die seitlichen Platten 10' nicht gezeichnet. Damit die Abdeckprofilelemente 5 nicht bereits vor dem Eintritt in den Bereich des Arbeitsteiles 3 von der Führungsschiene 2 abgehoben werden, ist vorzugsweise ein weiteres oberes Führungselement 14 vorgesehen. Dadurch wird für die Kettenglieder der Abdeckprofilelemente 5 ein Führungskanal 15 gebildet, welcher ein vorzeitiges Abheben der Abdeckprofilelemente 5 von der Führungsschiene 2 verhindert.

Vorzugsweise sind diese beiden Führungselemente 12, 14 aus einem Kunststoff hergestellt, welcher gute Gleiteigenschaften aufweist, damit die Abdeckprofilelemente 5 leicht und ohne grosse Geräuschentwicklung über diese Führungselemente 12, 14 gleiten können.

Vorteilhafterweise werden diese Führungselemente 12, 14 auf beiden Seiten des Arbeitsteiles 3 angeordnet. Die erfindungsgemässe Abdeckanordnung erlaubt nun eine zuverlässige und einfache Abdeckung von Führungsschienen 2. Die Abdeckprofilelemente 5 lassen sich einfach und kostengünstig herstellen und vorteilhafterweise auch einfach auf die Breite der Führungsschienen 2 auslegen, indem die Breite der Kettenglieder 8 entsprechend festgelegt wird, wie beispielsweise besonders gut aus Figur 5 hervorgeht. Hier ist besonders deutlich ersichtlich, wie die Platten 10' die Führungsnuten der Führungsschiene 2 seitlich abdecken. Die Kettenglieder 8 führen in der dargestellten Ausführungsform zu einer praktisch lückenfreien, homogenen Abdeckung der Führungsschienen-Oberkante.

## Patentansprüche

1. Abdeckanordnung für Führungsschienen (2) von Maschinen (1), auf welchen Arbeitsteile (3) der Maschine verfahrbar angeordnet sind, mit U-förmigen Abdeckprofilelementen (5), welche gelenkig miteinander zu einem Abdeckprofil (4) verbunden sind, und deren Profiiquerschnitt derart bemessen ist, dass damit die Schienenoberseite und -flanke abdeckbar ist, wobei wenigstens ein Ende der miteinander verbundenen Abdeckprofilelemente an einem Ende der Führungsschiene (6;7) in Schienenlängsrichtung unverschiebbar mit der Führungsschiene (2) oder der Maschine (1) verbunden ist und mit dem Arbeitsteil (3) verbundene Führungselemente (12,14) vorhanden sind, über welche das Abdeckprofil (4) geführt ist und damit in diesem Bereich von der Führungsschiene (2) abgehoben ist, dadurch gekennzeichnet, dass die Abdeckprofilelemente (5) aus Kettengliedern (8) mit Gelenkachsen (9) bestehen, welche jeweils an der Aussenseite eine sich senkrecht zur Gelenkachse erstreckende Abdeckplatte (10') aufweisen.

2. Abdeckanordnung nach Anspruch 1, dadurch gekennzeichnet, dass die miteinander verbundenen Abdeckprofilelemente (5) an beiden Enden der Führungsschiene (6,7) mit dieser oder der Maschine (1) verbunden sind.

3. Abdeckanordnung nach Anspruch 1 oder 2, dadurch gekennzeichnet, dass sich die Abdeckplatten (10') benachbarter Abdeckprofilelemente (5) in verbundenem Zustand teilweise überdecken.

4. Abdeckanordnung nach einem der Ansprüche 1 bis 3, dadurch gekennzeichnet, dass die Breite der Führungselemente (12;14) höchstens der Breite der Führungsschiene entspricht und dass die Endbereiche (13) der Führungselemente (12) keilförmig ausgestaltet sind.

5. Abdeckanordnung nach Anspruch 4, dadurch gekennzeichnet, dass jeweils zwei Führungselemente (12,14) derart übereinander angeordnet sind, dass sie einen Kanal (15) bilden, in welchem die Abdeckprofilelemente (5) geführt sind.

6. Abdeckanordnung nach Anspruch 4 oder 5, dadurch gekennzeichnet, dass die Führungselemente (12,14) aus Kunststoff bestehen.

7. Abdeckanordnung nach einem der Ansprüche 1 bis 6, dadurch gekennzeichnet, dass die Abdeckprofilelemente (5) aus Metall oder Kunststoff bestehen.

## Claims

1. Covering arrangement for guide rails (2) of machines (1), on which working parts (3) of the machine (1) are arranged conveyable, with U-shaped covering profile elements (5), which are articulated to each other forming a covering profile (4), and having a profile cross section which is dimensioned in such a way that the rail surface and rail side flank may be covered, whereby at least one end of the interconnected covering profile elements at one end of the guide rail (6;7) is in longitudinal direction of the rail immovably connected to the guide rail (2) or to the machine (1) and guide elements (12,14) connected to the working part (3) are provided, over which the covering profile (4) is carried and therefore taken off from the guide rail (2) in this zone, characterized in that the covering profile elements (5) consist of links of a chain (8) with articulated shafts (9), having on each respective outer side a covering plate (10') extending perpendicularly to the articulated shaft.

2. Covering arrangement according to claim 1, characterized in that the interconnected covering profile elements (5) are connected to the guide rail (6; 7) or to the machine (1) at both ends of said guide rail (6;7).

3. Covering arrangement according to claim 1 or 2, characterized in that the covering plates (10') of interconnected neighbouring covering profile elements (5) partly are overlapping each other.

4. Covering arrangement according to one of claims 1 to 3, characterized in that the width of the guide elements (12;14) is at most equal to the width of the guide rail and that the end sections (13) of the guide elements (12) are wedge-shaped.

5. Covering arrangement according to claim 4, characterized in that the guide elements (12;14) are arranged by pairs on top of each other such as to form a channel (15), in which the covering profile elements (5) are guided.

6. Covering arrangement according to claim 4 or 5, characterized in that the guide elements (12;14) are made of plastic material.

7. Covering arrangement according to one of the claims 1 to 6, characterized in that the covering profile elements (5) is made of metal or of plastic material.

## Revendications

1. Couverture pour les rails de guidage (2) de machines (1), sur lesquelles des éléments de travail (3) de la machine sont arrangés de manière à pouvoir se déplacer, avec des éléments de recouvrement profilés (5) en forme de U, qui sont assemblés articulés les uns avec les autres pour former un profile de recouvrement (4), et dont la coupe transversale est dimensionnée telle qu'il puisse recouvrir la surface supérieure et latérale de la glissière au moins une extrémité des éléments de recouvrement profilés articulés à une extrémité de la glissière (6;7) étant attachée immobilisée en sens de la direction longitudinale de la glissière à la glissière (2) ou à la machine (1) et des éléments de guidage (12,14) étant présent, attachés à l'élément de travail (3), sur lesquels le profil de recouvrement (4) est guidé et par consequence est séparé de la glissière (2) dans cette zone, caractérisé en ce que les éléments de recouvrement profilés (5) sont formés de chaînons (8) avec des axes d'articulation (9), et présentant sur chaque face extérieure une planque de recouvrement (10') s'étendant perpendiculairement par rapport à l'axe d'articulation.

2. Couverture selon la revendication 1, caractérisé en ce que les éléments de recouvrement profilés (5) assemblés les uns aux autres sont attachés à la glissière (6,7) ou à la machine (1) aux deux extrémités de la glissière.

3. Couverture selon la revendication 1 ou 2, caractérisé en ce que les planques de recouvrements (10') des éléments de recouvrement profilés (5)adjacentes se couvrent partiellement à état assemblé.

4. Couverture selon une des revendications 1 à 3, caractérisé en ce que la largeur des éléments de guidage (12; 14) est au maximum égale à la largeur de la glissière et en ce que les zones aux extrémités (13) des éléments de guidage (12) sont en forme de coin.

5. Couverture selon la revendication 4, caractérisé en ce que les éléments (12;14) de guidage son arrangés par paire l'un sur l'autre de telle manière à former un canal (15), dans lequel des éléments de recouvrement (5) sont guidés.

6. Couverture selon la revendication 4 ou 5, caractérisé en ce que les éléments de guidage (12;14) sont en matière plastique.

7. Couverture selon une des revendications 1 à 6, caractérisé en ce que les éléments de recouvrement profilés (5) sont en métal ou en plastique.
